(19) Europäisches Patentamt
European Patent Office
Office européen des brevets

(11) EP 2 351 267 B1

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(21) Anmeldenummer: **09744949.0**

(22) Anmeldetag: **15.10.2009**

(51) Int Cl.:
*H04B 17/00* (2006.01)     *H04W 72/04* (2009.01)

(86) Internationale Anmeldenummer:
**PCT/EP2009/007417**

(87) Internationale Veröffentlichungsnummer:
**WO 2010/049066 (06.05.2010 Gazette 2010/18)**

(54) **VORRICHTUNG UND VERFAHREN ZUR FREQUENZSELEKTIVEN BELEGUNGSERFASSUNG**

DEVICE AND METHOD FOR FREQUENCY-SELECTIVE ASSIGNMENT DETECTION

DISPOSITIF ET PROCÉDÉ DE DÉTECTION DE L'OCCUPATION EN FONCTION DES FRÉQUENCES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **31.10.2008 DE 102008054070**

(43) Veröffentlichungstag der Anmeldung:
**03.08.2011 Patentblatt 2011/31**

(73) Patentinhaber: **Innovationszentrum für Telekommunikationstechnik GmbH IZT**
**91058 Erlangen (DE)**

(72) Erfinder:
• **PERTHOLD, Rainer**
**91085 Weisendorf (DE)**
• **WENINGER, Dieter**
**91459 Markt Erlbach (DE)**
• **SCHLEGEL, Holger**
**90433 Nürnberg (DE)**

(74) Vertreter: **Hersina, Günter**
**Schoppe, Zimmermann, Stoeckeler & Zinkler**
**Postfach 246**
**82043 Pullach (DE)**

(56) Entgegenhaltungen:
• **MATTHIAS WELLENS ET AL: "Evaluation of Spectrum Occupancy in Indoor and Outdoor Scenario in the Context of Cognitive Radio" COGNITIVE RADIO ORIENTED WIRELESS NETWORKS AND COMMUNICATIONS, 2007. CROWNCOM 2007. 2ND INTERNATIONAL CONFERENCE ON, IEEE, PISCATAWAY, NJ, USA, 1. August 2007 (2007-08-01), Seiten 420-427, XP031276085 ISBN: 978-1-4244-0814-6**
• **SPAULDING A D ET AL: "On the Definition and Estimation of Spectrum Occupancy" IEEE TRANSACTIONS ON ELECTROMAGNETIC COMPATIBILITY, IEEE SERVICE CENTER, NEW YORK, NY, US, Bd. EMC-10, Nr. 3, 1. August 1977 (1977-08-01), Seiten 269-280, XP011164795 ISSN: 0018-9375 in der Anmeldung erwähnt**
• **NICOLAE COTANIS ED - ATEFEH SALIMI SHAHRAKI ET AL: "New metrics for RF spectrum occupancy" CIRCUITS AND SYSTEMS FOR COMMUNICATIONS, 2008. ECCSC 2008. 4TH EUROPEAN CONFERENCE ON, IEEE, PISCATAWAY, NJ, USA, 10. Juli 2008 (2008-07-10), Seiten 266-269, XP031315037 ISBN: 978-1-4244-2419-1**
• **JOHN T MACDONALD ET AL: "Spectrum Occupancy Estimation in Wireless Channels with Asymmetric Transmitter Powers" COGNITIVE RADIO ORIENTED WIRELESS NETWORKS AND COMMUNICATIONS, 2007. CROWNCOM 2007. 2ND INTERNATIONAL CONFERENCE ON, IEEE, PISCATAWAY, NJ, USA, 1. August 2007 (2007-08-01), Seiten 245-249, XP031276054 ISBN: 978-1-4244-0814-6**

**Beschreibung**

Die vorliegende Erfindung bezieht sich auf eine Vorrichtung und ein Verfahren zum Erfassen einer Belegung eines Kanals innerhalb eines Frequenzbandes und insbesondere auf eine frequenzselektive Belegungsmessung basierend auf einem aus dem Rauschgrund ermittelten Schwellwert.

Um eine frequenzselektive Belegungsmessung (Spectrum Occupancy) von Funkkanälen durchführen zu können, bedarf es beispielsweise einer genauen Bestimmung eines Schwellwertes, über dessen Wert der zu messende Kanal als momentan aktiv klassifiziert wird oder unterhalb dessen der Kanal momentan als inaktiv klassifiziert wird.

Ferner kann mit einer frequenzselektiven Belegungsmessung von Funkkanälen ebenfalls ermittelt werden, welche Funkkanäle über die Zeit wie stark belegt sind und ob die Kanalparameter, wie beispielsweise die Mittenfrequenz oder die maximale Feldstärke eingehalten werden.

Der Schwellwert kann beispielsweise für die Dauer der Messung einfach fest auf einem Leistungspegelwert, der beispielsweise in dBm gemessen wird, eingestellt werden. Der Nachteil dieses Verfahrens besteht darin, dass sich bei einer Veränderung des Empfängers (z.B. der Antenne, Bandbreite, etc.) das Empfangsspektrum (Power Spectral Density = PSD) teils erheblich ändert. Dadurch kann es erforderlich werden, den Schwellwert jedes Mal neu zu justieren.

Denkbar ist auch, den Schwellwert adaptiv aus dem momentanen Empfangsspektrum zu ermitteln, indem man beispielsweise den Rauschgrund bestimmt und einen Versatz (Offset) in Dezibel (dB) dazuaddiert, so dass der sogenannte Noise-Riding-Threshold (NRT) erhalten wird. Ein Nachteil dieses Verfahrens besteht jedoch darin, dass in realen Situationen aufgrund der Beschaffenheit des Empfängers durchaus Empfangsspektren zu vermessen sind, welche nicht flach, sondern beispielsweise zu höheren Frequenzen hin ansteigend oder auch absteigend angeordnet sind. In diesem Fall werden die Funkkanäle abhängig von deren Lage im Empfangsspektrum bevorzugt als aktiv oder als inaktiv klassifiziert, was zu Messfehlern führt.

Die wissenschaftliche Veröffentlichung "MATTHIAS WELLENS ET AL: "Evaluation of Spectrum Occupancy in Indoor and Outdoor Scenario in the Context of Cognitive Radio" COGNITIVE RADIO ORIENTED WIRELESS NETWORKS AND COMMUNICATIONS, 2007. CROWN-COM 2007. 2ND INTERNATIONAL CONFERENCE ON, IEEE, PISCATA-WAY, NJ, USA, 1. August 2007 (2007-08-01), Seiten 420-427, XP031276085 ISBN: 978-1-4244-0814-6" bezieht sich auf eine Vorgehensweise zur Beurteilung der spektralen Belegung bei Indoor- und Outdoor-Szenarien. So wird ein Energiedetektor verwendet, um über eine spektrale Belegung zu entscheiden. Die PSD (Spektrale Leistungsdichte) wird mit einer bestimmten Entscheidungsschwelle verglichen. Falls die gemessene PSD innerhalb eines bestimmten Frequenzbandes sich über dieser Schwelle befindet, wird der Energiedetektor angeben, dass dieses Band belegt ist. Falls sich die gemessene PSD unterhalb dieser Schwelle befindet, wird das Frequenzband als frei (unbelegt) angegeben und könnte durch sekundäre Nutzer verwendet werden. Um nun eine realistische Schwelle zu bestimmen, wird das thermische Rauschen des Systems unter Verwendung eines angepassten 50-Ohm-Widerstands gemessen. Daraufhin wird die Verteilung der gemessenen Rauschabtastwerte verwendet, um zu bestimmen, dass eine Schwelle, die 3 dB höher als der gemessene Rauschgrund ist, zu einer Fehlalarmwahrscheinlichkeit von etwa 1 % führt, die durch Rauschabtastwerte mit hoher Leistung bewirkt werden.

Somit besteht ein Bedarf nach einer Vorrichtung und einem Verfahren, die es ermöglichen, die Belegungsmessung eines Funkkanals frequenzselektiv, flexibel und weitestgehend unabhängig von der Hardware durchzuführen.

Der Kerngedanke der vorliegenden Erfindung besteht darin, zunächst Frequenzen für Stützstellen (Stützstellenfrequenzen) zu bestimmen, die innerhalb des zu vermessenden Frequenzbereichs liegen, und daran anschließend Stützstellenpegelwerte für die jeweiligen Stützstellenfrequenzen zu bestimmen. Die Berechnung der Stützstellenpegelwerte kann mittels der Empfangspegelwerte des Empfangssignals erfolgen, wobei die Empfangspegelwerte durch eine Einrichtung (z.B. einen Eingang) erfasst werden. Durch eine Interpolation der Stützstellenpegelwerte kann der Schwellwertverlauf erhalten werden. Dieser Schwellwertverlauf hängt im Allgemeinen von der Frequenz ab und passt sich den jeweiligen Rauschgrund flexibel an. Mit Hilfe des Schwellwertverlaufs ist es möglich, die Belegung eines Kanals frequenzselektiv zu messen, was beispielsweise dadurch geschehen kann, dass die Momentanleistung der Empfangspegelwerte (des PSD-Signals) mit den durch den Schwellwertverlauf vorgegebenen Vergleichsleistung verglichen wird, um abhängig von dem Vergleich den Kanal als belegt oder nicht belegt zu klassifizieren.

Das vorgeschlagene Verfahren nutzt im Gegensatz zum Stand der Technik nicht nur einen Wert, sondern bedient sich mehrerer Werte zur adaptiven Bestimmung des NRT. Diese Werte, die im Folgenden auch als NRT-Stützstellen (Nodes) bezeichnet werden, bestehen aus einem Tupel von Frequenzen (Stützstellenfrequenzen) und Leistungspegel (Stützstellenpegelwerte). Dabei kann der Frequenzabstand benachbarter NRT-Stützstellen konstant sein oder zu höheren Frequenzen hin kleiner werden oder zu größeren Frequenzen hin größer werden. Dies bedeutet, dass die Frequenzen der NRT-Stützstellen anhand einiger Parameter frei einstellbar sind. Der Leistungspegel der NRT-Stützstellen hingegen bestimmt sich aus dem momentanen Empfangsspektrum bzw. aus einer Kombination aus vergangenen Empfangsspektren und dem momentanen Empfangsspektrum (Gedächtnis). Die so berechneten NRT-Stützstellen können dann auf der Basis der Frequenzen der FFT-Linien (FFT = Fast Fourier Transformation = Schnelle Fourier Transformation) des Empfangsspektrums in geeigneter Weise interpoliert werden, um den flexibel angepassten Schwellwertverlauf (Noise-Riding-Threshold) zu ermitteln. Um damit eine Belegungsmessung durchführen zu können, kann schließlich die Leistung des zu vermessenden Kanals mit der Leistung des entsprechenden Frequenzbereiches des Schwellwertverlaufes verglichen werden.

Die Arbeitsweise des Algorithmus, welches dem erfindungsgemäßen Verfahren zugrunde liegt, gliedert sich somit in zwei Teile:

(a) Festlegung und Anpassung der NRT-Stützstellen (Stützstellenfrequenzen);
(b) Berechnung des NRT (Stützstellenpegelwerten).

Zunächst soll die Festlegung und Anpassung der NRT-Stützstellen näher erläutert werden.

Die folgende Art der Konfiguration der NRT-Stützstellen hat sich als zweckmäßig erwiesen. Es wird eine Einteilung des gesamten zu untersuchenden Frequenzbereiches in Frequenzgruppen gemacht. Die Änderung oder der Größenzuwachs der Frequenzgruppenbreite von niedrigen Frequenzen her ist durch eine Startfrequenz (startfreq), eine Startfrequenzgruppenbreite (startbw), eine Endfrequenz (endfreq) und einem Wachstumsfaktor (geofac) konfigurierbar. Der Wachstumsfaktor beschreibt eine geometrische Reihe und bestimmt den Größenzuwachs der Frequenzgruppenbreite. Damit werden für das NRT-Raster folgende Frequenzen erhalten:

$$\texttt{freq(i)} = \texttt{startbw} \cdot \frac{1 - \texttt{geofac}^i}{1 - \texttt{geofac}} + \texttt{startfreq} \ , \ \texttt{i} = 1, \ldots, \texttt{n} \,. \quad (1)$$

Eine Abschätzung der Anzahl n der Frequenzen freq(i) mit startfreq $\leq$ freq(i) $\leq$ endfreq kann auf folgende Art vorgenommen werden

$$\left\lfloor \frac{\log_{10}\left(1 - \left(\dfrac{endfreq - startfreq}{startbw}\right) \cdot (1 - geofac)\right)}{\log_{10}(geofac)} \right\rfloor + 1 = n \,. \quad (2)$$

Wenn geofac = 1 gilt, bleibt die Frequenzgruppenbreite konstant, währenddessen die Frequenzgruppenbreite für geofac < 1 kleiner wird und für geofac > 1 wächst. Anhand empirischer Versuche hat sich als Wert für den Wachstumsfaktor geofac $\approx$ 1.01 als zweckmäßig erwiesen. Die Frequenzen der NRT-Stützstellen node(i) liegen dann genau in der Mitte benachbarter Frequenzen des NRT-Rasters:

$$\texttt{node(i)} = \frac{\texttt{freq(i)} + \texttt{freq(i + 1)}}{2}, \quad \texttt{i} = 1, \ldots, \texttt{n} - 1 \quad\quad (3)$$

node(i) repräsentiert nun alle Frequenzlinien f für die freq(i) $\leq$ f < freq (i+1) gilt.

In vielen Fällen ist es so, dass (Empfangs-) Spektren zu vermessen sind, innerhalb welcher die Frequenz der ersten FFT-Linie nicht mit einer Frequenz des NRT-Raster zusammentrifft. Als Folge werden Bereiche des Empfangsspektrums am Ende oder am Anfang nicht adäquat durch NRT-Stützstellen repräsentiert. Ein Ziel besteht jedoch darin, dass die NRT-Stützstellen optimal an das momentane Empfangsspektrum angepasst sind. Dies ist möglich, indem das NRT-Raster lokal möglichst wenig nach oben oder nach unten in der Frequenz verschoben wird, damit die nächstgelegene NRT-Raster-Frequenz mit der Frequenz der ersten FFT-Linie (Anfangsfrequenz) in dem Spektrum zusammenfällt. Um auch noch das Ende des Spektrums (Endfrequenz) durch eine NRT-Stützstelle gut repräsentieren zu können, kann der global eingestellte Wachstumsfaktor (geofac) lokal leicht modifiziert werden. Optional kann ebenfalls die Startfrequenzgruppenbreite im entsprechenden (Empfangs-)Spektrum variiert werden. Liegt beispielsweise die letzte NRT-Raster-Frequenz (letzte Stützstellenfrequenz) innerhalb des Empfangsspektrums näher an der letzten FFT-Linie des Empfangsspektrums, wird der Wachstumsfaktor leicht erhöht (expand). Liegt allerdings die nachfolgende NRT-Raster-Frequenz außerhalb des Empfangsspektrums näher an der Frequenz der letzten FFT-Linie, so wird der Wachstumsfaktor leicht verkleinert (shrink). Um den modifizierten Wachstumsfaktor zu ermitteln, kann beispielsweise das Newton-Verfahren genutzt werden. Dabei setzt man:

$$f(geofac_n) = = psdStartbw \cdot \frac{1-geofac_n^k}{1-geofac_n} + psdStartfreq - psdEndfreq \qquad (4)$$

Die erste Ableitung von f lautet:

$$f'(geofac_n) = = -psdStartbw \cdot \frac{k \cdot geofac_n^{k-1}}{1 - geofac_n} + psdStarbw \cdot \frac{1 - geofac_n^k}{(1 - geofac_n)^2} \cdot \qquad (5)$$

Das Newton Verfahren kann für eine iterative Bestimmung der Nullstellen von f genutzt werden, wobei die Iterationsfolge für geofac gegeben ist durch:

$$geofac_{n+1} = geofac_n - \frac{f(geofac_n)}{f'(geofac_n)} \qquad (6)$$

und anhand n=0,1,2, ... eine Näherung für den lokal modifizierten Wachstumsfaktor erhalten wird (hier bezeichnet n lediglich den Iterationsschritt und nicht wie in Glg. (1) die Anzahl der Frequenzen). Bei $geofac_0$ handelt es sich um den gegebenen global eingestellten Wachstumsfaktor, wie er beispielsweise in der Gleichung 1 genutzt wurde. Der Wert k wird auf die gewünschte Anzahl der NRT-Raster-Frequenzen innerhalb des Empfangsspektrums -1 gesetzt. Der Wert psdStartbw stellt die erste Frequenzgruppenbreite innerhalb des Spektrums dar. Bei psdStartfreq (Anfangsfrequenz) oder bei psdEndfreq (Endfrequenz) handelt es sich um die Frequenz der ersten oder letzten FFT-Linie in diesem (Empfangs-) Spektrum. Da das Newton-Verfahren eine quadratische Konvergenz besitzt, genügen beispielsweise sieben Iterationen für eine ausreichende Genauigkeit. In Abhängigkeit von der gewünschten Genauigkeit können jedoch die Anzahl der Iterationsschritte variieren, so kann beispielsweise bereits nach zwei, drei, vier, fünf oder auch bei sechs Iterationen bereits eine ausreichende Genauigkeit vorhanden sein kann. Ebenfalls ist es möglich, dass mehr als sieben Iterationen genutzt werden, um die Genauigkeit weiter zu erhöhen. So können beispielsweise acht, neun, zehn oder mehr als zwölf Iterationen genutzt werden.

Mit dem so ermittelten und lokal modifizierten Wachstumsfaktor (geofac) wird dann das NRT-Raster für den Frequenzbereich dieses Empfangsspektrums durch die Gleichung 1 erneut berechnet. Letztlich werden noch zwei zusätzliche NRT-Stützstellen auf die erste und letzte FFT-Linie gesetzt, welche den Bereich der ersten FFT-Linie bis zur ersten regulären NRT-Stützstelle bzw. letzter regulärer NRT-Stützstelle bis letzte FFT-Linie repräsentieren. Somit erhalten die Empfangsspektren ihr eigenes lokales NRT-Raster, welches möglichst nahe am globalen NRT-Raster, wie es durch die Gleichung 1 gegeben ist, liegt.

Die folgenden Bemerkungen befassen sich mit einer geeigneten Berechnung des Schwellwertes (Stützstellenpegelwerten) an den NRT-Stützstellen.

Bei weiteren Ausführungsbeispielen wird zunächst eine Mittelung aufeinanderfolgender Empfangspegelwerte vorgenommen und für die Bestimmung der Stützstellenpegelwerten wird das Resultat der Mittelung als neuen Empfangspegelmittelwert genutzt.

Bei Ausführungsbeispielen können die Stützstellenpegelwerte basierend auf den zugehörigen Empfangspegelwerten bestimmt werden. Beispielsweise kann daraus ein Histogramm gebildet werden. Der Stützstellenpegelwert kann beispielsweise durch eine untere Leistungspegelgrenze in dem Histogramm bestimmt werden oder alternative einen bestimmten Abstand zu der unteren Leistungspegelgrenze aufweisen.

Ferner kann die Einrichtung zum Bestimmen von Pegelwerten ausgebildet sein, um die Stützstellenpegelwerte zu korrigieren, so dass eine Differenz von benachbarten Stützstellenpegelwerten innerhalb einer maximalen Toleranzbreite (z.B. innerhalb von $\pm 10\%$, $\pm 20\%$ oder $\pm 50\%$) liegt. Die Korrektur kann ebenfalls dahingehend erfolgen, dass ein zeitlich zuvor bestimmter Stützstellenpegelwert in die Bestimmung eines gegenwärtigen Stützstellenpegelwerts derart einbezogen wird, dass stark ändernde Pegelwerte gedämpft sind.

Bei weiteren Ausführungsbeispielen weist die Einrichtung zum Bestimmen der Stützstellenpegelwerte einen Leck-Integrierer auf, um beispielsweise eine Dämpfung zu erreichen.

Nachdem die Stützstellenpegelwerte bestimmt sind, kann außerdem eine Interpolation erfolgen, um den Schwellwertverlauf zwischen den Stützstellenpegelwerten an den Stützstellenfrequenzen zu bestimmen. Die Interpolation kann beispielsweise eine lineare Interpolation oder eine kubische Interpolation oder eine eingeschränkte kubische Interpolation umfassen.

Schließlich ist bei Ausführungsbeispielen die Einrichtung zum Bestimmen des Schwellwertverlaufs ausgebildet, um bei der Bestimmung des Schwellwertverlaufs einen Offset (Versatz) hinzuzufügen, so dass der Schwellwertverlauf einen versetzten Abstand zu dem Rauschgrund aufweist.

Ausführungsbeispiele der vorliegenden Erfindung umfassen die folgenden Vorteile bzw. das dargestellte Verfahren ist in folgenden Merkmalen besonders effektiv:

- Es ist eine Flexible und automatische Anpassung an vorhandene Hardware möglich.

- Durch die Gleichung 1 ist es möglich, ein NRT-Raster zu verwenden, welches sich gut an reale Gegebenheiten anpasst. So nehmen tendenziell zu höheren Frequenzen die Bandbreiten der Emitter zu.

- Ferner kann ein weitgehender Ausschluss von statistischen Signalen bei möglichst guter Approximation des Rauschgrundes erreicht werden.

- Eine sehr gute Schätzung des Rauschgrundes über der Frequenz wird erreicht, wobei alles, was nach künstlichem Signal aussieht, ignoriert wird (die Kurve ist eher flach).

- Statistische Signale künstlichen Ursprungs, z.B. Störsignale, liegen unterhalb der Kurve.

- Eine geringe Berechnungskomplexität wird ermöglicht.

- Die Implementierung ist einfach strukturiert und somit gut skalierbar.

Ausführungsbeispiele der vorliegenden Erfindung werden nachfolgend Bezug nehmend auf die beiliegenden Zeichnungen näher erläutert. Es zeigen:

Fig. 1      eine schematische Darstellung einer Vorrichtung gemäß einem Ausführungsbeispiel der vorliegenden Erfindung;

Fig. 2      eine Darstellung der Zunahme der Frequenzgruppenbandbreite mit der Frequenz;

Fig. 3      eine schematische Darstellung für die Berechnung des Schwellwertverlaufes;

Fig. 4      eine Histogrammdarstellung zur Ermittlung eines Stützstellenpegelwertes;

Fig. 5a,b      eine Gegenüberstellung möglicher Interpolationsarten;

Fig. 6      ein berechneter Schwellwertverlauf im Kurzwellenbereich;

Fig. 7      ein berechneter Schwellwertverlauf im UKW-Rundfunkbereich; und

Fig. 8a,b      ein Beispiel für eine Konfiguration einer spektralen Belegungsmessung und entsprechende Messergebnisse.

Bezüglich der nachfolgenden Beschreibung sollte beachtet werden, dass bei den unterschiedlichen Ausführungsbeispielen gleiche oder gleichwirkende Funktionselemente gleiche Bezugszeichen aufweisen und somit die Beschreibung dieser Funktionselemente in den verschiedenen nachfolgend dargestellten Ausführungsbeispielen untereinander austauschbar sind.

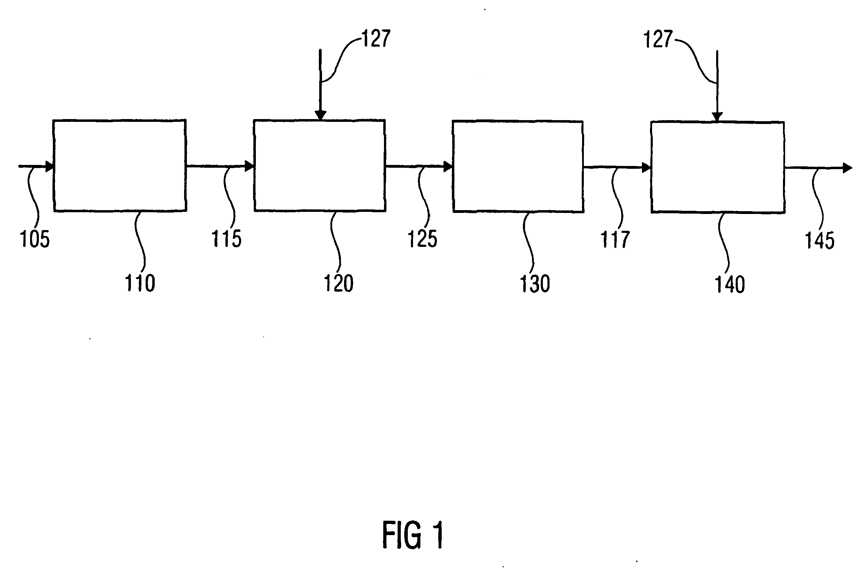

Fig. 1 zeigt eine schematische Darstellung für ein Ausführungsbeispiel der vorliegenden Erfindung. Die Vorrichtung zur frequenzselektiven Belegungserfassung eines Kanals in einem Frequenzband weist eine Einrichtung 105 zum Erfassen eines Empfangsspektrums in dem Frequenzband, eine Einrichtung 110 zum Bereitstellen von Stützstellenfrequenzen 115, eine Einrichtung 120 zum Bestimmen von Stützstellenpegelwerten 125, eine Einrichtung 130 zum Bestimmen des Schwellwertverlaufs 117 und eine Einrichtung 140 zum Vergleichen auf.

Die erfindungsgemäße Vorrichtung dient der frequenzselektiven Belegungserfassung eines Kanals in einem Frequenzband, wobei zunächst ein Empfangsspektrum über eine Einrichtung 105 (z. B. einen Eingang) erfasst und der Einrichtung 110 zugeführt werden. Die Einrichtung 110 stellt die Stützstellenfrequenzen 115 für einen Schwellwertverlauf 117 bezüglich eines Rauschgrunds in dem Frequenzband bereit. Die Einrichtung 120 bestimmt die Stützstellenpegelwerten 125 an den Stützstellenfrequenzen 115 basierend auf Empfangspegelwerten 127 des Empfangsspektrums. Die Einrichtung 130 bestimmt den Schwellwertverlaufs 117 in dem Frequenzband basierend auf den bereitgestellten Stützstellenfrequenzen 115 und auf den Stützstellenpegelwerten 125 an den Stützstellenfrequenzen 115. Die Einrichtung 140 vergleicht eine Momentanleistung der Empfangspegelwerten 127 in dem Kanal mit einer durch den Schwellwertverlauf 117 vorgegebenen Vergleichsleistung in dem Kanal, um abhängig von dem Vergleich eine Belegung oder Nichtbelegung des Kanals zu erfassen (oder zu ermitteln). Das Resultat kann beispielsweise über einen Ausgang 145 ausgegeben werden. Die Ausgabe kann dabei beispielsweise einen prozentualen Wert umfassen, mit welchem der Kanal belegt ist, so dass beispielsweise bei einem Wert von deutlich über 50 % (z.B. 80 oder 90 %) der Kanal als belegt gelten kann.

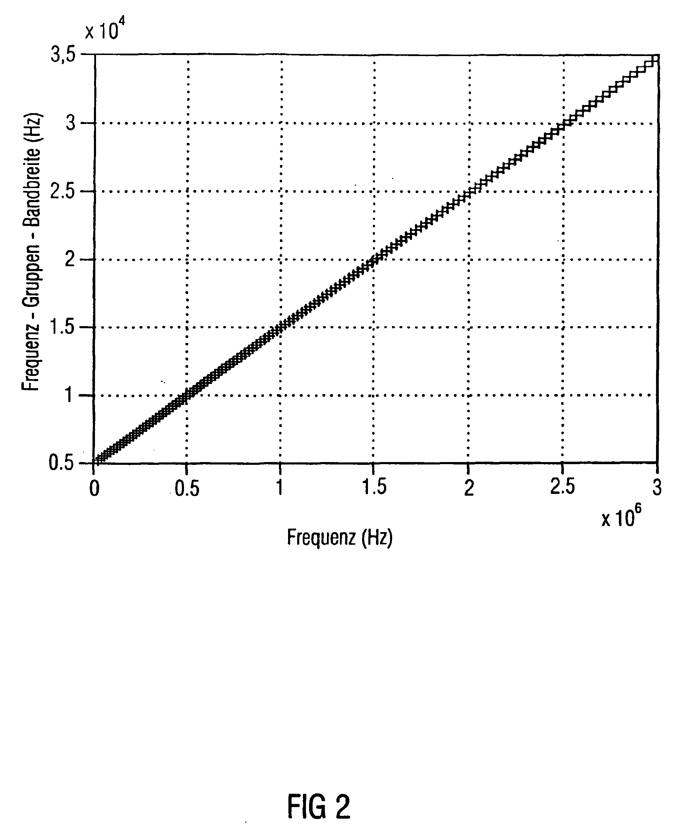

Fig. 2 zeigt eine beispielhafte Abhängigkeit der Frequenzgruppenbandbreite (gemessen in Hertz) von der Frequenz (gemessen in Hertz). Bei dem gezeigten Beispiel ist somit das Verhältnis von der Frequenz der NRT-Stützstelle zu NRT-Frequenzgruppenbreite dargestellt, wobei für die Parameter (in den Gleichung 1 bis 3) folgende Werte als Beispiel genommen wurden: geofac=1.01, startbw=5 kHz, startfreq=9 kHz und endfreq=3 MHz. Die dargestellte Frequenzgruppenbandbreite ergibt sich aus den Gleichungen 1 bis 3 und nimmt mit der Frequenz monoton zu. Das ist eine Folge der geometrischen Reihe für den Wachstumsfaktor geofac, der größer ist als 1. Die Verhältnisse sind dabei durch Kreuze dargestellt, so dass das ein erstes Kreuz bei der NRT-Stützstelle von (9+5)/2=7 kHz liegt und die erste Frequenzgruppenbandbreite bei 5 kHz beträgt.

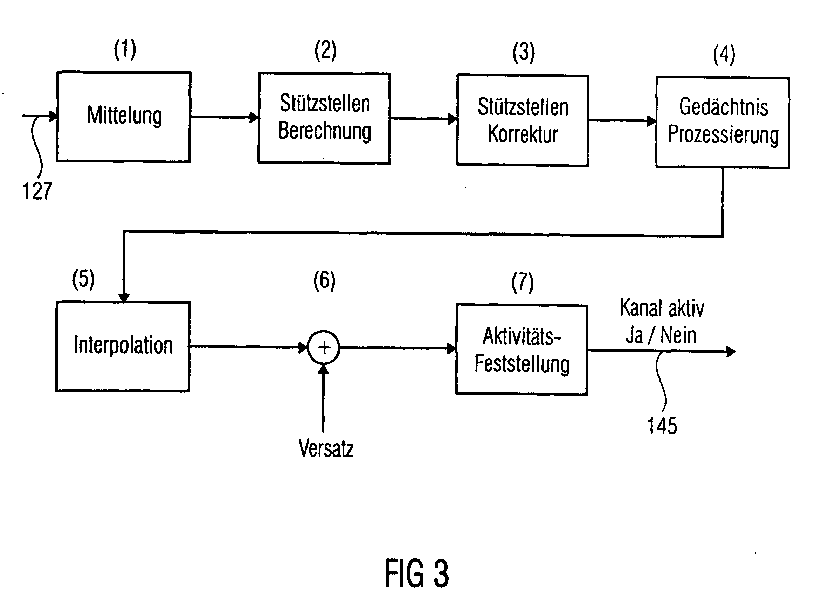

Fig. 3 zeigt eine Berechnung des NRT als Teil (b) des oben erwähnten Algorithmus anhand eines Blockschaltbildes. In der dargestellten beispielhaften Prozessierungsreihenfolge werden bei diesem Ausführungsbeispiel die Verarbeitungsschritte (1) bis (7) pro Empfangsspektrum 127 durchgeführt.

Dabei können die einzelnen Schritte beispielsweise die folgenden Funktionen umfassen:

(1) eine Mittelung:

Hier kann eine Mittelung aufeinanderfolgender Eingangsspektren (PSD), die die Empfangspegelwerte 127 umfassen können, vorgenommen werden. Die Mittelung kann beispielsweise durch die Bildung des arithmetischen Mittelwertes aufeinanderfolgender Spektren oder anhand einer Gedächtnisbehafteten Mittelung, wie sie beispielsweise durch einen so genannten Leaky-Integrator (einem Leck-Integrierer) geschehen kann, erfolgen. Durch die Mittelung ist es möglich, die Breite des Rauschgrundes variabel, beispielsweise < 1 dB, einzustellen.

(2) Stützstellenberechnung:

Innerhalb dieses Verarbeitungsblockes, in dem die Stützstellenpegelwerte 125 ermittelt werden, kann beispielsweise ein Histogramm von Empfangspegelwerten 127 mit beispielsweise einer Auflösung von -235 dBm bis 20 dBm in 1 dB Schritten gebildet werden. Empfangspegelwerte 127 unterhalb -235 dBm können dabei beispielsweise in einem ersten Bucket (oder Korb) des Histogramms eingeordnet werden und Werte oberhalb 20 dBm können beispielsweise in einem letzten Bucket des Histogramms eingeordnet werden. Abhängig von einem frei einstellbaren Parameter (noisefac) kann nun gewählt werden, wie viel Buckets verworfen werden, um den Leistungspegel dieser NRT-Stützstellen (Stützstellenpegelwerte 125) zu bestimmen. Dieser Verarbeitungsschritt erfolgt in der Einrichtung 120 zum Bestimmen von Stützstellenpegelwerten 125.

Die Anzahl der verworfenen Buckets kann beispielsweise durch die folgende Formel bestimmt werden:

$$numBucketsSkip = \left\lfloor \frac{noisefac}{100} \cdot numBucketsNotZero \right\rfloor . \qquad (7)$$

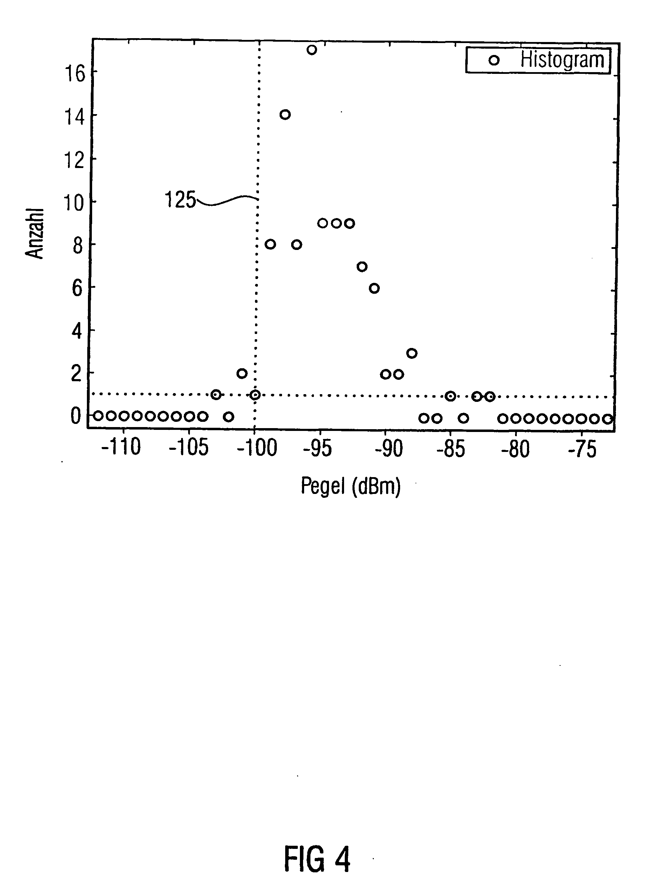

Weitere Details zu diesem Verarbeitungsschritt werden mit der Fig. 4 näher beschrieben.

(3) Ermittlung von Stützstellenkorrekturen:

Aufgrund diverser Signaleigenschaften ist es möglich, dass im Verarbeitungsblock (2) Stützstellenpegelwerte 125 der NRT-Stützstellen ermittelt werden, die von anderen vorhandenen Stützstellenpegelwerten 125 abweichen. Diese Extremwerte können anhand der Stützstellenkorrektur (Nodes Correction) nachjustiert werden. Denkbar wäre beispielsweise nur eine maximale Abweichung zum Vorgängerwert zu erlauben. Die Stützstellenkorrektur ist ein optionaler Verarbeitungsschritt oder eine optionale Verarbeitungsstufe.

(4) Gedächtnisprozessierung:

In dieser optionalen Verarbeitungsstufe können in die Berechnung der momentanen Stützstellenpegelwerte zeitlich vorhergehende Stützstellenpegelwerte mit einbezogen werden (Gedächtnis). Eine Möglichkeit dies zu realisieren ist beispielsweise durch einen sogenannten Leaky-Integrator oder Leck-Integrierer gegeben. Es gibt verschiedene Ausprägungen des Leck-Integrierers, wovon hier beispielhaft zwei dargestellt sein sollen:

(A) Simple Leaky-Integrator: Der Leaky-Integrator erzeugt eine Art gleitendes Mittel.

$$y(i) = \frac{x(i) + y(i-1) \cdot \omega}{\omega + 1}, \qquad i = 1, \ldots, n \tag{8}$$

Wobei $x(i)$ der aktuelle Pegelwert und $y(i)$ der gemittelte Pegelwert in der jeweiligen Verarbeitungsstufe (Iteration) ist, die mit "i" nummeriert wird. Bei $\omega$ handelt es sich um den Gewichtungsfaktor und für $i=1$ wird in der Implementierung $y(i-1)=x(1)$ gesetzt.
(B) Advanced-Leaky-Integrator: Dieser Ansatz erlaubt ein unterschiedliches Sättigungs- und Abklingverhalten. Falls $x(i)>y(i-1)$ wird durch

$$y(i) = \alpha \cdot y(i-1) + (1-\alpha) \cdot x(i) \tag{9}$$

eine Sättigung herbeigeführt. Diese kann durch eine Zeitkonstante $\alpha$ konfiguriert werden. Für $i=1$ wird in der Implementierung $y(i-1)=x(1)$ gesetzt. Falls $x(i) \leq y(i-1)$ wird durch

$$y(i) = \beta \cdot y(i-1) + (1-\beta) \cdot x(i) \tag{10}$$

ein abklingendes Verhalten erzeugt. Das Abklingverhalten kann durch eine Zeitkonstante $\beta$ konfiguriert werden.

(5) Interpolation:

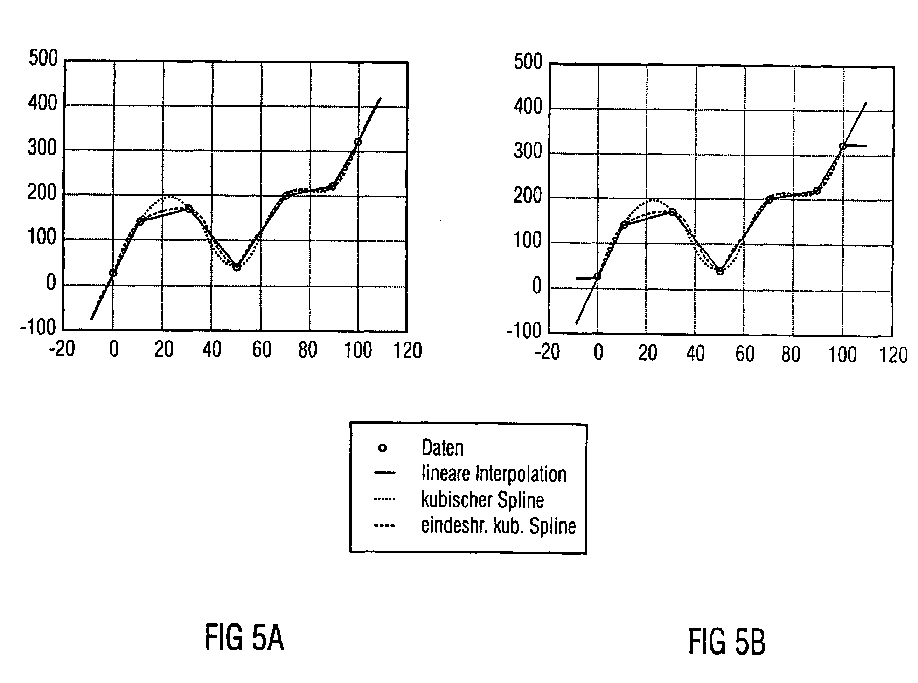

Die bisher ermittelten Pegelwerte 125 an den NRT-Stützstellen können nun auf der Basis der Frequenzen der FFT-Linien des momentanen Spektrums (Empfangspegelwerte 127) interpoliert werden. Bei Ausführungsbeispielen für den NRT-Algorithmus sind drei Interpolationsmethoden möglich: die lineare, die kubische (sogenannter Cubic-Spline) und die eingeschränkte kubische Interpolation (sogenannte Constrained-Cubic-Spline). Außerhalb der NRT-Stützstellen liegende zu interpolierende Werte werden entweder aus den beiden benachbarten Pegelwerten 125 an den NRT-Stützstellen linear extrapoliert oder es wird der nächstliegende NRT-Stützstellen-Leistungspegelwert fortgeführt (Steigung 0). Weitere Details werden mit den Figuren 5a und 5b beschrieben.

(6) Hinzufügen eines Versatzes (Offset-Addition):

Auf den soweit berechneten NRT, die den Schwellwertverlauf 117 bilden, kann zur Feinabstimmung ein Versatz in x dB addiert werden. Dieser Versatz wird auch als Offset bezeichnet und verschiebt den Schwellwertverlauf 117 um den Betrag des Versatzes.

(7) Aktivitätsfeststellung:

Die Aktivitätsdetektion umfasst eine Abschätzung, ob der Kanal als belegt/unbelegt klassifiziert werden kann. In diesem Schritt kann beispielsweise die Momentanleistung $P_{PSD}$ im zu beobachtenden Kanal berechnet und anschließend verglichen werden mit ein durch den Schwellwertverlauf 117 vorgegebenen Vergleichsleistung $P_{NRT}$ in dem Kanal. Beide Leistungen können beispielsweise quadratisch gemittelt (RMS = root mean square) und wie folgt berechnet werden:

$$\hat{P}_{PSD_{RMS}} = \sqrt{\frac{1}{n}\sum_{i=k}^{n+k-1}\left(10^{\frac{x(i)_{PSD}}{10}}\cdot 0.001\right)^2} = \sqrt{\frac{1}{10^6 n}\sum_{i=k}^{n+k-1}\left(10^{\frac{x(i)_{PSD}}{5}}\right)} \quad ; (10)$$

$$\hat{P}_{NRT_{RMS}} = \sqrt{\frac{1}{n}\sum_{i=k}^{n+k-1}\left(10^{\frac{x(i)_{Thr}}{10}}\cdot 0.001\right)^2} = \sqrt{\frac{1}{10^6 n}\sum_{i=k}^{n+k-1}\left(10^{\frac{x(i)_{Thr}}{5}}\right)} \quad . \qquad (11)$$

Bei k handelt es sich um den ersten in diesem Kanal zu berücksichtigenden Spektralwert (Empfangspegelwert 127). Bei n handelt es sich um die Gesamtanzahl der zu berücksichtigenden Spektralwerte in diesem Kanal.
Wenn nun:

$$\hat{P}_{PSD_{RMS}} > \hat{P}_{NRT_{RMS}} \qquad\qquad (12)$$

gilt, dann kann der Kanal beispielsweise als aktiv (belegt) klassifiziert werden, ansonsten nicht. Anstelle des RMS könnte eine einfache Aufsummierung der Leistungen erfolgen, so dass die Größen

$$\hat{S}_{PSD_{LinSum}} = \sum_{i=k}^{n+k-1}\left(10^{\frac{x(i)_{PSD}}{10}}\cdot 0.001\right) \qquad , \qquad\qquad (13)$$

$$\hat{S}_{NRT_{LinSum}} = \sum_{i=k}^{n+k-1}\left(10^{\frac{x(i)_{Thr}}{10}}\cdot 0.001\right) \qquad\qquad (14)$$

verglichen werden und wenn $\hat{S}_{PSD_{LinSum}} > \hat{S}_{NRT_{LinSum}}$ gilt, der Kanal wiederum als belegt klassifiziert (erfasst) wird.
Nach Abschluss der Aktivitätsfeststellung kann das Resultat, ob der Kanal belegt ist ja oder nein, über den Ausgang 145 ausgegeben werden. Der Ausgang 145 kann optional eine Anzeige aufweisen.
Die Fig. 4 gibt eine beispielhafte Darstellung für die Bestimmung eines Pegelwertes 125 an einer der Stützstellenfrequenzen 115. Diese Darstellung bezieht sich auf die Gleichung 7, bei der der noisefac=12 verwendet worden ist, d.h. dass 12 % der nicht leeren Buckets von kleinen Werten her verworfen werden, um den Stützstellenpegelwert 125 dieser NRT-Stützstelle zu bestimmen. In dem in der Fig. 4 gezeigten Fall wurden zwei Buckets von insgesamt 18 nicht leeren Buckets verworfen, so dass ein Leistungspegel von -100 dBm als der Pegelwert 125 der Stützstellenfrequenz 115 erhalten wurde. Im Detail zeigt die Fig. 4 eine Wahrscheinlichkeitsverteilung der Pegelwerte, wobei der erste von 0 verschiedene Pegelwert bei -103 dBm liegt und der zweite von 0 verschiedene Pegelwert bei -101 dBm liegt. Diese beiden ersten Pegelwerte (von niedrigen Pegelwerten aus gesehen) werden aufgrund des angenommenen noisefac in dem gegebenen Beispiel verworfen (12 % von 18=2). Der nächste von Null verschiedene Pegelwert liegt bei -100 dBm, wobei die Pegelwerte von -103 dBm und von -100 dBm jeweils einmal im Histogramm vorkommen und der Pegelwert von -101 dBm zweimal in dem Histogramm vorkommt. Daran anschließend kommt ein vierter Pegelwert bei -99 dBm insgesamt 8 mal vor, der fünfte Pegelwert bei -98 dBm 14 mal, der sechste Pegelwert bei -97 dBm 8 mal und der siebte Pegelwert bei -96 dBm insgesamt 17 mal vor. Das Histogramm setzt sich fort bis zu dem letzten von 0 verschiedenen Pegelwert, der bei -82 dBm liegt und 1 mal in dem Histogramm vorkommt. Oberhalb des Pegelwertes von -82 dBm und unterhalb des Pegelwertes von - 106 dBm sind keine von 0 verschiedenen Pegelwerte gemessen worden.

Bei weiteren Ausführungsbeispielen kann der noisefac variiert werden, so dass nicht nur zwei Pegelwerte verworfen werden, sondern mehr oder auch weniger Pegelwerte verworfen werden, um den Stützstellenpegelwert 125 für die Stützstellenfrequenz 115 zu bestimmen.

In der Fig. 5a,b sind die verschiedenen Interpolationsmethoden verglichen, die in dem Verarbeitungsschritt (5) der Fig. 3 durchgeführt werden können. Insgesamt sind in der Fig. 5ä,b drei Interpolationsmethoden einander gegenübergestellt: wobei die eng gepunktete Linie eine lineare Interpolation der Daten (die durch Kreise gekennzeichnet sind) darstellt, eine dünn gepunktete Linie die kubische Interpolation darstellt und eine durchgezogene Linie die eingeschränkte kubische Interpolation darstellt. Alle Interpolationen passieren die als Kreise dargestellten Datenpunkte.

Bei der linearen Interpolation werden die Datenpunkte durch Geraden miteinander verbunden. Bei der kubischen und eingeschränkt-kubischen Interpolation werden die Abschnitte zwischen jeweils zwei benachbarte Datenpunkte jeweils durch ein kubisches Polynom dargestellt. Bei der kubischen Interpolation werden die kubischen Polynome derart aneinandergepasst, dass sowohl die erste als auch die zweite Ableitung der kubischen Polynome sich stetig an den Datenpunkten verhalten, währenddessen bei der eingeschränkten kubischen Interpolation das Polynom selbst und die ersten Ableitungen, nicht jedoch die zweiten Ableitungen sich stetig verhalten. Stattdessen wurde bei der eingeschränkt-kubischen Interpolation als Zusatzrandbedingung angenommen, dass der Wert der ersten Ableitung an den Datenpunkten einen vorbestimmten Wert hat. Dieser vorbestimmte Wert kann beispielsweise so gewählt werden, dass die Tangenten an den Datenpunkten möglichst mittig zwischen den Geraden der linearen Interpolation liegt so dass die Zwischengebiete zwischen den Datenpunkten möglichst nahe an der linearen Interpolation liegen.

Der Unterschied zwischen der Fig. 5a und 5b besteht darin, wie die Interpolation jenseits des ersten und des letzten Datenpunktes, d.h. für Werte < 0 oder für Werte > 100 fortgesetzt wird. Bei der Fig. 5a erfolgt eine lineare Extrapolation, währenddessen bei der Fig. 5b eine konstante Fortsetzung des Graphen (mit Steigung Null) erfolgt. Die dargestellten Kurven bezeichnen somit einen Schwellwertverlauf zwischen den Stützstellen.

Ein Nachteil der kubischen Interpolationsmethode (Cubic Spline) besteht in der Tatsache, dass abhängig von der Lage der Stützstellen starke "Überschwinger" auftreten können (siehe beispielsweise in der Fig. 5a bei dem Wert x=20). Die lineare Interpolation hat dieses Problem nicht, hat aber den Nachteil an den Stützstellen Ecken zu erzeugen (nicht stetige erste Ableitung). Die eingeschränkte kubische Interpolationsmethode versucht beiden Problemen zu begegnen. Zum einen sind die "Überschwinger" möglichst eliminiert, zum anderen werden aber die Ecken entschärft.

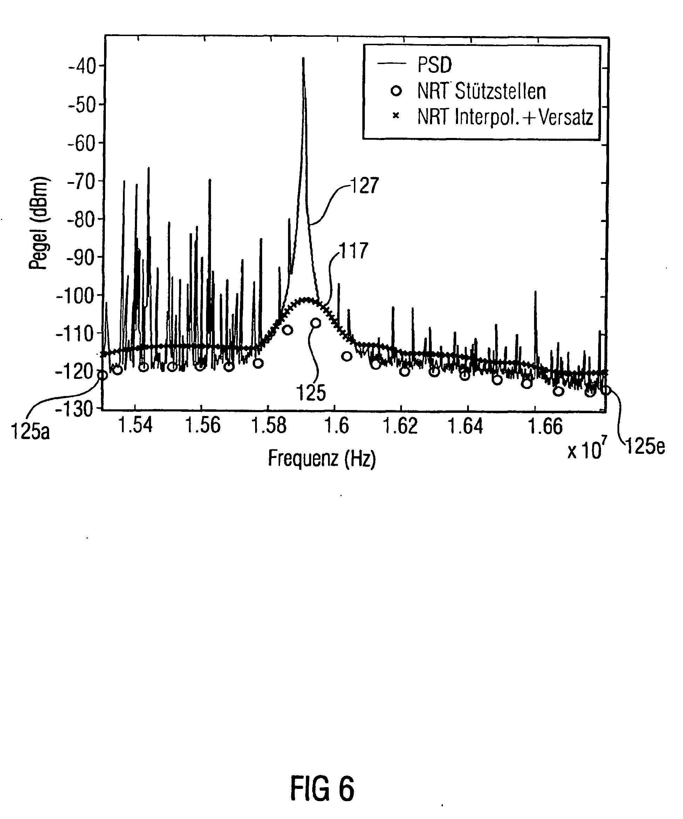

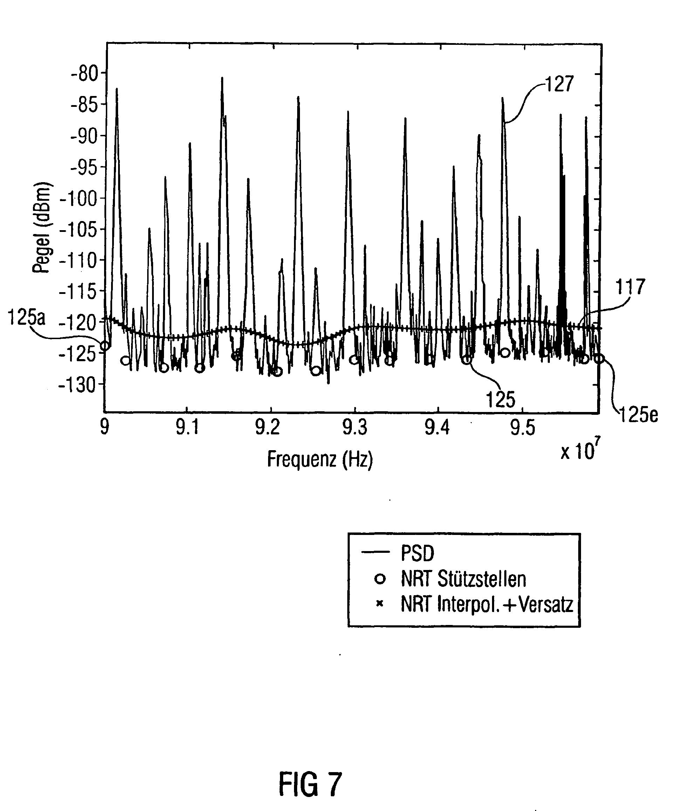

Die Fig. 6 und 7 zeigen die Arbeitsweise des erfindungsgemäßen NRT-Algorithmus anhand realer Signale im Kurzwellen - oder UKW-Rundfunkbereich.

Fig. 6 zeigt eine berechnete NRT (Schwellwertverlauf 117) im Kurzenwellenbereich. Es sind dabei die Empfangspegelwerte 127 gezeigt, für die die NRT-Stützstellen (NRT Nodes) oder Stützstellenpegelwerte 125 berechnet wurden, um daraus schließlich den Schwellwertverlauf 117 (endgültig berechneter NRT) zu bestimmen, der sowohl eine Interpolation als auch den Versatz berücksichtigt. Der Versatz bewirkt eine Verschiebung des Schwellwertverlaufs 117 zu größeren Pegelwerten (oberhalb der Stützstellenpegelwerten 125). In der Fig. 6 wurden dabei beispielhaft folgende Werte angenommen, Mittenfrequenz: 16,0475 MHz, Versatz 5 dB, lokaler geofac: 1,0068.

Fig. 7 zeigt einen analog berechneten NRT für den Ultrakurzwellen-Rundfunkbereich, wobei in der Fig. 7 beispielsweise folgende Werte angenommen wurden: Mittenfrequenz = 92,975 MHz, Versatz = 5 dB, lokaler geofac = 1,0022. Auch in der Fig. 7 ist somit ein Empfangspegel 127 gezeigt, für den die Stützstellenpegelwerte 127 berechnet wurden. Daran anschließend wurde durch eine Interpolation und durch das Hinzufügen des Versatzes der Schwellwertverlauf 117 berechnet.

Sowohl in der Fig. 6 als auch in der Fig. 7 ist zu sehen, dass die erste Stützstellenfrequenz 115a und die letzte Stützstellenfrequenz 115e jeweils am Anfang und am Ende des Frequenzbandes liegen, d.h. in der Fig. 6 ist die erste Stützstellenfrequenz 115a bei ca. 15,3 MHz gelegen und die letzte Stützstellenfrequenz 115e bei ca. 16,8 MHz. Dazwischen befinden sich insgesamt 17 Stützstellenfrequenzen 125. In ähnlicher Weise ist in der Fig. 7 die erste Stützstellenfrequenz 115a auf den Anfang des Spektrums bei ca. 90 MHz gelegen und die letzte Stützstellenfrequenz 115e beim Endpunkt des untersuchten Frequenzbandes bei ca. 96 MHz gelegen. In der Fig. 7 befinden sich zwischen diesen beiden Endpunkten insgesamt 13 weitere Stützstellenfrequenzen 115.

In beiden Figuren ist gut ersichtlich, wie sich der Schwellwertverlauf 117 (NRT) an den Rauschgrund anpasst, was ein wesentlicher Vorteil von Ausführungsbeispielen der vorliegenden Erfindung darstellt.

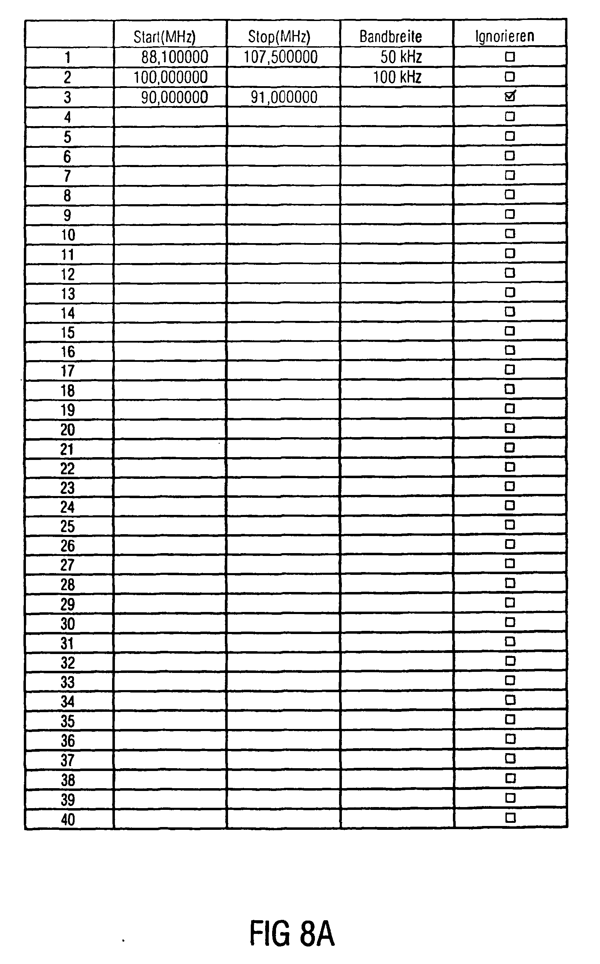

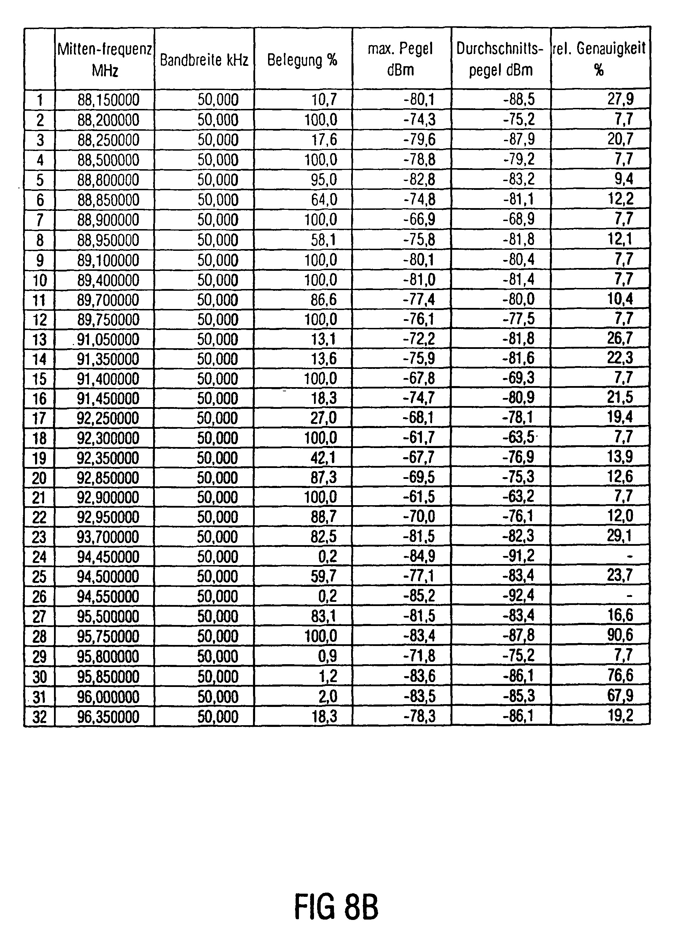

In der Fig. 8a, b ist eine beispielhafte Konfiguration gezeigt, wie sie beispielsweise innerhalb eines Computerprogramms zur spektralen Belegungsmessung genutzt werden kann. Das Computerprogramm kann somit ein Messsystem zur spektralen Belegungsmessung steuern und kontrollieren.

Wie die Fig. 8a zeigt, wird dabei beispielhaft der Frequenzbereich von 88,1 MHz bis 107,5 MHz mit einer Kanalbandbreite von 50 kHz vermessen. Zusätzlich wurde die Frequenz von 100 MHz mit einer Kanalbreite von 100 kHz vermessen, wobei der Frequenzbereich zwischen 90 MHz und 91 MHz von der Messung ausgeschlossen wurde. Bei dieser Messung wurde der Versatz von 10 dB eingestellt und die Gesamtmesszeit betrug 2 Stunden, wobei über 2 Minutenintervalle jeweils eine Statistik berechnet wurde.

Die Fig. 8b zeigt das Ergebnis der Messung nach 3 Minuten und 44 Sekunden für die zu vermessenden 369 Kanäle, für die je eine Statistik berechnet wurde. Beispielsweise hat sich dabei gezeigt, dass die Frequenz von 89,7 MHz bei einer Bandbreite von 50 kHz mit einer relativen Genauigkeit von ± 10,4 % zu 86,6 % belegt ist. Im Verlauf der Gesamtmesszeit (2 Stunden) sinkt die relative Genauigkeit über diesen Kanal, so dass das Messergebnis sich immer weiter an der tatsächlichen Kanalbelegung annähert. Die relative Genauigkeit kann dabei beispielsweise durch übliche statistische Methoden ermittelt werden, wobei wie gesagt die Fig. 8b lediglich ein erstes Zwischenergebnis des Messsystems zur spektralen Belegungsmessung zeigt.

Bei weiteren praktischen Implementierungen des erfindungsgemäßen NRT-Algorithmus können die Parameter beispielsweise wie folgt gewählt werden: startbw = 8 kHz, startfreq = 9 kHz, endfreq = 3 GHz, geofac = 1,01, Mittelung = 4...32, noisefac = 5 %, Versatz = 5 dB und eine FFT-Länge von 4096. Dies sind jedoch lediglich beispielhafte Werte, die bei weiteren Ausführungsbeispielen verändert werden können.

Ferner können bei weiteren Ausführungsbeispielen des erfindungsgemäßen NRT-Algorithmus in Verbindung mit einer statistischen Auswertung dazu verwendet werden, um ein genaues Messverfahren zur Bestimmung der Spektralbelegung (Spectral Occupancy) zu realisieren. Für die statistische Auswertung können beispielsweise Verfahren verwendet werden, wie sie in: Spaulding, A.D; Hagn, G.H.: On the Definition and Estimation of Spectrum Occupancy, IEEE Transactions, Vol. EMC-19, No. 3, August 1977 offenbart sind.

Ausführungsbeispiele der vorliegenden Erfindung können auch wie folgt zusammengefasst werden. Sie umfassen ein Verfahren zur frequenzselektiven Belegungsmessung basierend auf einem aus dem Rauschgrund ermittelten Schwellwert, welcher beispielsweise dadurch gekennzeichnet ist, dass mehrere NRT-Stützstellen oder Stützstellenfrequenzen 115 zur Berechnung des Schwellwertes (NRT) verwendet werden. Ferner können dabei die Stützstellenfrequenzen 115 (die dem NRT zugrunde liegenden Frequenzen der NRT-Stützstellen) anhand verschiedener Parameter flexibel an reale Gegebenheiten angepasst werden. Die Anpassung kann beispielsweise in Hinblick auf eine Minimierung der Fehlerrate erfolgen. Außerdem können die Stützstellenfrequenzen 115 anhand einer geometrischen Reihe flexibel an reale Gegebenheiten angepasst werden. Bei Ausführungsbeispielen ist es ferner möglich, die ermittelten Leistungspegel (Pegelwerte 125 an den Stützstellenfrequenzen 115) der NRT-Stützstellen zu interpolieren. Die Pegelwerte 125 an den Stützstellenfrequenzen 115 können dabei beispielsweise anhand einer Cubic Spline - oder Constrained-Cubic-Spline-Interpolation interpoliert werden.

Bei weiteren Ausführungsbeispielen kann das NRT-Raster an das momentane Empfangsspektrum (Empfangspegelwerte 127) angepasst werden. Die Anpassung an das momentane Empfangsspektrum kann beispielsweise durch eine Frequenzverschiebung und Anpassung des Wachstumsfaktors realisiert werden. Die Frequenzverschiebung und die Anpassung des NRT-Rasters an das momentane Empfangsspektrum kann beispielsweise durch einen lokal modifizierten Faktor der geometrischen Reihe realisiert werden. Ferner umfassen Ausführungsbeispiele ein Verfahren, bei dem das NRT-Raster an das momentane Empfangsspektrum durch eine Frequenzverschiebung und Anpassung des Faktors der geometrischen Reihe basierend auf einer Näherung des Newton-Verfahrens realisiert wird.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

Gemäß einem Aspekt weist eine Vorrichtung zur frequenzselektiven Belegungserfassung eines Kanals in einem Frequenzband folgende Merkmale auf: eine Einrichtung 105 zum Erfassen eines Empfangsspektrums in dem Frequenzband; eine Einrichtung 110 zum Bereitstellen von Stützstellenfrequenzen 115 für einen Schwellwertverlauf 117 bezüglich eines Rauschgrunds in dem Frequenzband; eine Einrichtung 120 zum Bestimmen von Stützstellenpegelwerten 125 an den Stützstellenfrequenzen 115 basierend auf Empfangspegelwerten 127 des Empfangsspektrums; eine Einrichtung 130 zum Bestimmen des Schwellwertverlaufs 117 in dem Frequenzband basierend auf den bereitgestellten Stützstellenfrequenzen 115 und auf den Stützstellenpegelwerten 125 an den Stützstellenfrequenzen 115; und eine Einrichtung 140 zum Vergleichen einer Momentanleistung der Empfangspegelwerten 127 in dem Kanal mit einer durch den Schwellwertverlauf 117 vorgegebenen Vergleichsleistung in dem Kanal, um abhängig von dem Vergleich eine Belegung oder Nichtbelegung des Kanals zu erfassen.

Gemäß Ausführungsbeispielen der Vorrichtung ist die Einrichtung 110 zum Bereitstellen der Stützstellenfrequenzen 115 ausgebildet, um eine Differenz benachbarter Stützstellenfrequenzen 115 mit zunehmender Frequenz in dem Frequenzband um einen Änderungsfaktor zu ändern.

Beispielsweise wächst die Differenz benachbarter Stützstellenfrequenzen 115 mit zunehmender Frequenz in dem Frequenzband.

Gemäß Ausführungsbeispielen der Vorrichtung weist das Frequenzband eine Anfangs- und eine Endfrequenz auf, wobei die Einrichtung 110 zum Bereitstellen der Stützstellenfrequenzen 115 ausgebildet ist, um benachbarte Stützstellenfrequenzen 115 so zu wählen, dass eine erste Stützstellenfrequenz 115a mit der Anfangsfrequenz und eine letzte Stützstellenfrequenz 115e mit der Endfrequenz innerhalb eines Toleranzbereichs übereinstimmt.

Beispielsweise ist die Einrichtung 110 zum Bereitstellen von Stützstellenfrequenzen 115 ausgebildet, um mittels des Newton-Verfahrens die erste Stützstellenfrequenz 115a mit der ersten Frequenz und die letzte Stützstellenfrequenz 115e mit der letzten Frequenz in Übereinstimmung zu bringen.

Gemäß Ausführungsbeispielen der Vorrichtung ist die Einrichtung 120 zum Bestimmen von Stützstellenpegelwerten 125 ausgebildet, um die Stützstellenpegelwerte 125 basierend auf aufeinander folgenden Empfangspegelwerten 127 zu bestimmen.

Beispielsweise ist die Einrichtung 120 zum Bestimmen von Stützstellenpegelwerten 125 ausgebildet, um aus den aufeinander folgenden Empfangspegelwerte 127 ein Histogramm zu bilden, und um ferner die Stützstellenpegelwerte 125 durch eine untere Leistungspegelgrenze in dem Histogramm zu bestimmen.

Gemäß Ausführungsbeispielen der Vorrichtung ist die Einrichtung 120 zum Bestimmen der Stützstellenpegelwerte 125 ausgebildet, um einen zeitlich zuvor bestimmten Stützstellenpegelwert in die Bestimmung eines gegenwärtigen zu bestimmenden Stützstellenpegelwert derart einzubeziehen, dass stark ändernde Stützstellenpegelwerte 125 gedämpft sind.

Beispielsweise weist die Einrichtung 120 zum Bestimmen der Stützstellenpegelwerte 125 einen Leck-Integrierer auf und ist der Leck-Integrierer ausgebildet, um die Dämpfung zu erreichen.

Gemäß Ausführungsbeispielen der Vorrichtung ist die Einrichtung 130 zum Bestimmen des Schwellwertverlaufs 117 ausgebildet, um den Schwellwertverlauf 117 durch eine Interpolation zwischen den Stützstellenpegelwerten 125 an den Stützstellenfrequenzen 115 zu bestimmen.

Beispielsweise weist die Interpolation eine lineare Interpolation oder eine kubische Interpolation oder eine eingeschränkt-kubische Interpolation auf.

Gemäß einem weiteren Aspekt weist ein Verfahren zur frequenzselektiven Belegungserfassung eines Kanals in einem Frequenzband folgende Schritte auf: Erfassen 105 eines Empfangsspektrums in dem Frequenzband; Bereitstellen 110 von Stützstellenfrequenzen 115 für einen Schwellwertverlauf 117 bezüglich eines Rauschgrunds in dem Frequenzband; Bestimmen 120 von Stützstellenpegelwerten 125 an den Stützstellenfrequenzen 115 basierend auf Empfangspegelwerten 127 des Empfangsspektrums; Bestimmen 130 des Schwellwertverlaufs 117 in dem Frequenzband basierend auf den bereitgestellten Stützstellenfrequenzen 115 und auf den Stützstellenpegelwerten 125 an den Stützstellenfrequenzen 115; und Vergleichen 140 einer Momentanleistung von Empfangspegelwerten 127 in dem Kanal mit einer durch den Schwellwertverlauf 117 vorgegebenen Vergleichsleistung in dem Kanal, um abhängig von dem Vergleich eine Belegung oder Nichtbelegung des Kanals zu erfassen.

Beispielsweise wird das Bereitstellen 110 der Stützstellenfrequenzen 115 derart ausgeführt, dass eine Differenz benachbarter Stützstellenfrequenzen 115 mit zunehmender Frequenz in dem Frequenzband um einen Änderungsfaktor anwächst.

Bei einem Ausführungsbeispiel des Verfahrens weist das Frequenzband eine Anfangs- und eine Endfrequenz auf, wobei das Bereitstellen 110 der Stützstellenfrequenzen 115 derart ausgeführt wird, dass eine erste Stützstellenfrequenz 115a mit der Anfangsfrequenz und eine letzte Stützstellenfrequenz 115e mit der Endfrequenz innerhalb eines Toleranzbereichs übereinstimmt.

Bei einem weiteren Ausführungsbeispiel des Verfahrens umfasst das Bestimmen 120 von Stützstellenpegelwerten 125 ferner das Bilden eines Histogramms aus aufeinander folgenden Empfangspegelwerten 127 und werden ferner die Stützstellenpegelwerte 125 durch einen Leistungspegel, der einen bestimmten Abstand zu einer unteren Leistungspegelgrenze aufweist, bestimmt.

Bei einem weiteren Ausführungsbeispiel des Verfahrens weist das Bestimmen 130 des Schwellwertverlaufs 117 ferner ein Interpolieren zwischen den Stützstellenpegelwerten 125 auf, so dass der Schwellwertverlauf 117 durch die Interpolation bestimmt ist.

Bei einem weiteren Ausführungsbeispiel des Verfahrens umfasst das Vergleichen 140 ein Ermitteln eines Mittelwerts der Momentanleistung in dem Kanal und ferner eines weiteren Mittelwerts der Vergleichsleistung in dem Kanal, und wird der Kanal als belegt klassifiziert, wenn der Mittelwert der Momentanleistung oberhalb des weiteren Mittelwertes der Vergleichsleistung ist.

Gemäß einem weiteren Aspekt weist ein Computerprogramm einen Programmcode zur Durchführung eines Verfahrens zur frequenzselektiven Belegungserfassung eines Kanals in einem Frequenzband mit folgenden Schritten: Erfassen 105 eines Empfangsspektrums in dem Frequenzband; Bereitstellen 110 von Stützstellenfrequenzen 115 für einen Schwellwertverlauf 117 bezüglich eines Rauschgrunds in dem Frequenzband; Bestimmen 120 von Stützstellenpegelwerten 125 an den Stützstellenfrequenzen 115 basierend auf Empfangspegelwerten 127 des Empfangsspektrums; Bestimmen 130 des Schwellwertverlaufs 117 in dem Frequenzband basierend auf den bereitgestellten Stützstellenfrequenzen 115 und auf den Stützstellenpegelwerten 125 an den Stützstellenfrequenzen 115; und Vergleichen 140 einer Momentanleistung von Empfangspegelwerten 127 in dem Kanal mit einer durch den Schwellwertverlauf 117 vorgegebenen Vergleichsleistung in dem Kanal, um abhängig von dem Vergleich eine Belegung oder Nichtbelegung des Kanals zu erfassen, auf, wenn das Computerprogramm auf einem Computer abläuft.

**Patentansprüche**

1. Vorrichtung zur frequenzselektiven Belegungserfassung eines Kanals in einem Frequenzband, mit folgenden Merkmalen:

    einer Einrichtung (105) zum Erfassen eines Empfangsspektrums in dem Frequenzband;
    einer Einrichtung (110) zum Bereitstellen von Stützstellenfrequenzen (115) für einen Schwellwertverlauf (117) bezüglich eines Rauschgrunds in dem Frequenzband;
    eine Einrichtung (120) zum Bestimmen von Stützstellenpegelwerten (125) an den Stützstellenfrequenzen (115) basierend auf Empfangspegelwerten (127) des Empfangsspektrums;
    einer Einrichtung (130) zum Bestimmen des Schwellwertverlaufs (117) in dem Frequenzband basierend auf den bereitgestellten Stützstellenfrequenzen (115) und auf den Stützstellenpegelwerten (125) an den Stützstellenfrequenzen (115); und
    einer Einrichtung (140) zum Vergleichen einer Momentanleistung der Empfangspegelwerten (127) in dem Kanal mit einer durch den Schwellwertverlauf (117) vorgegebenen Vergleichsleistung in dem Kanal, um abhängig von dem Vergleich eine Belegung oder Nichtbelegung des Kanals zu erfassen.

2. Vorrichtung nach Anspruch 1, bei der die Einrichtung (105) zum Erfassen ausgebildet ist, um das Empfangsspektrum in zeitlichen Abständen mehrmals zu erfassen.

3. Vorrichtung nach Anspruch 1 oder 2, bei der die Einrichtung (110) zum Bereitstellen der Stützstellenfrequenzen (115) ausgebildet ist, um eine Differenz benachbarter Stützstellenfrequenzen (115) mit zunehmender Frequenz in dem Frequenzband um einen Änderungsfaktor zu ändern.

4. Vorrichtung nach einem der vorangegangenen Ansprüche, wobei das Frequenzband eine Anfangs- und eine Endfrequenz aufweist, und wobei die Einrichtung (110) zum Bereitstellen der Stützstellenfrequenzen (115) ausgebildet ist, um benachbarte Stützstellenfrequenzen (115) so zu wählen, dass eine erste Stützstellenfrequenz (115a) mit der Anfangsfrequenz und eine letzte Stützstellenfrequenz (115e) mit der Endfrequenz innerhalb eines Toleranzbereichs übereinstimmt.

5. Vorrichtung nach einem der vorhergehenden Ansprüche, bei der die Einrichtung (110) zum Bereitstellen ausgebildet ist, um die Stützstellenfrequenzen (115) für das Frequenzband einer Tabelle zu entnehmen.

6. Vorrichtung nach einem der vorangegangenen Ansprüche, bei der die Einrichtung (120) zum Bestimmen von Stützstellenpegelwerten (125) ausgebildet ist, um die Stützstellenpegelwerte (125) basierend auf aufeinander folgenden Empfangspegelwerten (127) zu bestimmen.

7. Vorrichtung nach einem der Ansprüche 1 bis 6, bei der die Einrichtung (120) zum Bestimmen von Stützstellenpegelwerten (125) ausgebildet ist, um aus aufeinander folgenden Empfangspegelwerten (127) ein Histogramm zu bilden, und um ferner die Stützstellenpegelwerte (125) durch einen Leistungspegel, der einen bestimmten Abstand zu einer unteren Leistungspegelgrenze aufweist, zu bestimmen.

8. Vorrichtung nach einem der vorhergehenden Ansprüche, bei der die Einrichtung (120) zum Bestimmen von Stützstellenpegelwerten (125) ausgebildet ist, um eine Mittelung aufeinander folgender Empfangspegelwerte (127) vorzunehmen und um ferner ein Resultat der Mittelung als neuen Empfangspegelwert zu nutzen.

9. Vorrichtung nach einem der vorangegangenen Ansprüche, bei der die Einrichtung (120) zum Bestimmen von Stützstellenpegelwerten (125) ausgebildet ist, um die Stützstellenpegelwerte (125) zu korrigieren, so dass eine Differenz von benachbarten Stützstellenpegelwerten (125) innerhalb einer maximalen Toleranzbreite liegt.

10. Vorrichtung nach einem der vorangegangen Ansprüche, bei der die Einrichtung (120) zum Bestimmen der Stützstellenpegelwerte (125) ausgebildet ist, um einen zeitlich zuvor bestimmten Stützstellenpegelwert in die Bestimmung eines gegenwärtigen zu bestimmenden Stützstellenpegelwert derart einzubeziehen, dass stark ändernde Stützstellenpegelwerte (125) gedämpft sind.

11. Vorrichtung nach einem der vorangegangenen Ansprüche, bei der die Einrichtung (130) zum Bestimmen des Schwellwertverlaufs (117) ausgebildet ist, um den Schwellwertverlauf (117) durch eine Interpolation zwischen den Stützstellenpegelwerten (125) an den Stützstellenfrequenzen (115) zu bestimmen.

12. Vorrichtung nach einem der vorangegangenen Ansprüche, bei der die Einrichtung (130) zum Bestimmen des Schwellwertverlaufs (117) ausgebildet ist, um bei der Bestimmung des Schwellwertverlaufs (117) einen Offset hinzuzufügen, so dass der Schwellwertverlauf (117) einen versetzten Abstand zu dem Rauschgrund aufweist.

13. Vorrichtung nach einem der vorangegangenen Ansprüche, bei der die Einrichtung (140) zum Vergleichen ausgebildet ist, um ferner den Kanal als belegt zu klassifizieren, wenn die Momentanleistung der Empfangspegelwerte (127) größer ist als die Vergleichsleistung des Schwellwertverlaufs (117).

14. Vorrichtung nach einem der vorangegangenen Ansprüche, bei der die Einrichtung (140) zum Vergleichen ausgebildet ist, um einen Mittelwert der Momentanleistung in dem Kanal und einen weiteren Mittelwert der Vergleichsleistung in dem Kanal zu ermitteln, und um ferner den Kanal als belegt zu klassifizieren, wenn der Mittelwert der Momentanleistung oberhalb des weiteren Mittelwertes der Vergleichsleistung ist.

15. Verfahren zur frequenzselektiven Belegungserfassung eines Kanals in einem Frequenzband, mit folgenden Schritten:

   Erfassen (105) eines Empfangsspektrums in dem Frequenzband;
   Bereitstellen (110) von Stützstellenfrequenzen (115) für einen Schwellwertverlauf (117) bezüglich eines Rauschgrunds in dem Frequenzband;
   Bestimmen (120) von Stützstellenpegelwerten (125) an den Stützstellenfrequenzen (115) basierend auf Empfangspegelwerten (127) des Empfangsspektrums;
   Bestimmen (130) des Schwellwertverlaufs (117) in dem Frequenzband basierend auf den bereitgestellten Stützstellenfrequenzen (115) und auf den Stützstellenpegelwerten (125) an den Stützstellenfrequenzen (115); und
   Vergleichen (140) einer Momentanleistung von Empfangspegelwerten (127) in dem Kanal mit einer durch den Schwellwertverlauf (117) vorgegebenen Vergleichsleistung in dem Kanal, um abhängig von dem Vergleich eine Belegung oder Nichtbelegung des Kanals zu erfassen.

## Claims

1. Apparatus for frequency-selective occupancy detection of a channel in a frequency band, comprising:

   a means (105) for detecting a receive spectrum in the frequency band;
   a means (110) for providing node frequencies (115) for a threshold curve (117) with respect to a noise floor in the frequency band;
   a means (120) for determining node level values (125) at the node frequencies (115) based on the receive level values (127) of the receive spectrum;
   a means (130) for determining the threshold curve (117) in the frequency band based on the provided node frequencies (115) and on the node level values (125) at the node frequencies (115); and
   a means (140) for comparing a current power of the receive level values (127) in the channel with a reference power in the channel predetermined by the threshold curve (117), for determining, in dependence on the comparison, an occupancy or non-occupancy of the channel.

2. Apparatus according to claim 1, wherein the means (105) for detecting is implemented to detect the receive spectrum several times within time intervals.

3. Apparatus according to claims 1 or 2, wherein the means (110) for providing the node frequencies (115) is implemented to change a difference of adjacent node frequencies (115) with increasing frequency in the frequency band by a factor of change.

4. Apparatus according to one of the previous claims, wherein the frequency band has a initial and a terminal frequency, and wherein the means (110) for providing the node frequencies (115) is implemented to select adjacent node frequencies (115) such that a first node frequency (115a) corresponds to the initial frequency, and a last node frequency (115e) corresponds to the terminal frequency within a tolerance range.

5. Apparatus according to one of the previous claims, wherein the means (110) for providing is implemented to take the node frequencies (115) for the frequency band from a table.

6. Apparatus according to one of the previous claims, wherein the means (120) for determining node level values (125) is implemented to determine the node level values (125) based on successive receive level values (127).

7. Apparatus according to one of claims 1 to 6, wherein the means (120) for determining node level values (125) is implemented to form a histogram from successive receive level values (127), and to further determine the node level values (125) by a power level having a specific distance to a lower power level limit.

8. Apparatus according to one of the previous claims, wherein the means (120) for determining node level values (125) is implemented to average successive receive level values (127) and to further use an averaging result as new receive level value.

9. Apparatus according to one of the previous claims, wherein the means (120) for determining node level values (125) is implemented to correct the node level values (125) such that a difference of adjacent node level values (125) lies within a maximum tolerance width.

10. Apparatus according to one of the previous claims, wherein the means (120) for determining node level values (125) is implemented to integrate a previously determined node level value into the determination of a node level value currently to be determined such that heavily varying node level values (125) are attenuated.

11. Apparatus according to one of the previous claims, wherein the means (130) for determining the threshold curve (117) is implemented to determine the threshold curve (117) by interpolation between the node level values (125) at the node frequencies (115).

12. Apparatus according to one of the previous claims, wherein the means (130) for determining the threshold curve (117) is implemented to add an offset in the determination of the threshold curve (117), so that the threshold curve (117) has an offset distance to the noise floor.

13. Apparatus according to one of the previous claims, wherein the means (140) for comparing is implemented to further classify the channel as occupied when the current power of the receive level values (127) is higher than the reference power of the threshold curve (117).

14. Apparatus according to one of the previous claims, wherein the means (140) for comparing is implemented to determine an average value of the current power in the channel and a further average value of the reference power in the channel, and to further classify the channel as occupied when the average value of the current power is above the further average value of the reference power.

15. Method for frequency-selective occupancy detection of a channel in a frequency band, comprising:

detecting (105) a receive spectrum in the frequency band;
providing (110) node frequencies (115) for a threshold curve (117) with respect to a noise floor in the frequency band;
determining (120) node level values (125) at the node frequencies (115) based on receive level values (127) of the receive spectrum;
determining (130) the threshold curve (117) in the frequency band based on the provided node frequencies (115) and on the node level values (125) at the node frequencies (115); and
comparing (140) a current power of receive level values (127) in the channel with a reference power in the channel predetermined by the threshold curve (117), in order to detect an occupancy or non-occupancy of the channel based on the comparison.

**Revendications**

1. Dispositif de détection de l'occupation sélective en fréquence d'un canal dans une bande de fréquences, aux caractéristiques suivantes:

   un moyen (105) destiné à détecter un spectre de réception dans la bande de fréquences;
   un moyen (110) destiné à mettre à disposition des fréquences de point d'appui (115) pour une évolution de valeur de seuil (117) par rapport à un fond de bruit dans la bande de fréquences;
   un moyen (120) destiné à déterminer des valeurs de niveau de point d'appui (125) aux fréquences de point d'appui (115) sur base des valeurs de niveau de réception (127) du spectre de réception;
   un moyen (130) destiné à déterminer l'évolution de valeur de seuil (117) dans la bande de fréquences sur base des fréquences de point d'appui mises à disposition (115) et des valeurs de niveau de point d'appui (125) aux fréquences de point d'appui (115); et
   un moyen (140) destiné à comparer une puissance momentanée des valeurs de niveau de réception (127) dans le canal prédéterminé par l'évolution de valeur de seuil (117), pour détecter, en fonction de la comparaison, une occupation ou non-occupation du canal.

2. Dispositif selon la revendication 1, dans lequel le moyen (105) destiné à détecter est réalisé pour détecter plusieurs fois le spectre de réception à des intervalles dans le temps.

3. Dispositif selon la revendication 1 ou 2, dans lequel le moyen (110) destiné à mettre à disposition les fréquences de point d'appui (115) est réalisé pour modifier d'un facteur de modification une différence entre fréquences de point d'appui adjacentes (115) à fréquence croissante dans la bande de fréquences.

4. Dispositif selon l'une des revendications précédentes, la bande de fréquences présentant une fréquence de début et une fréquence de fin et le moyen (110) destiné à mettre à disposition les fréquences de point d'appui (115) étant réalisé pour sélectionner des fréquences de point d'appui adjacentes (115) de sorte qu'une première fréquence de point d'appui (115a) coïncide avec la fréquence de début et qu'une dernière fréquence de point d'appui (115e) coïncide avec la fréquence de fin dans une plage de tolérances.

5. Dispositif selon l'une des revendications précédentes, dans lequel le moyen (110) destiné à mettre à disposition est réalisé pour prélever d'un tableau les fréquences de point d'appui (115) pour la bande de fréquences.

6. Dispositif selon l'une des revendications précédentes, dans lequel le moyen (120) destiné à déterminer des valeurs de niveau de point d'appui (125) est réalisé pour déterminer les valeurs de niveau de point d'appui (125) sur base de valeurs de niveau de réception successives (127).

7. Dispositif selon l'une des revendications 1 à 6, dans lequel le moyen (120) destiné à déterminer des valeurs de niveau de point d'appui (125) est réalisé pour former un histogramme à partir des valeurs de niveau de réception successives (127), et pour déterminer par ailleurs les valeurs de niveau de point d'appui (125) par un niveau de puissance présentant une distance déterminée par rapport à une limite de niveau de puissance inférieure.

8. Dispositif selon l'une des revendications précédentes, dans lequel le moyen (120) destiné à déterminer des valeurs de niveau de point d'appui (125) est réalisé pour procéder à l'établissement de la moyenne des valeurs de niveau de réception successives (127) et pour utiliser par ailleurs un résultat de l'établissement de la moyenne comme nouvelle valeur de niveau de réception.

9. Dispositif selon l'une des revendications précédentes, dans lequel le moyen (120) destiné à déterminer des valeurs de niveau de point d'appui (125) est réalisé pour corriger les valeurs de niveau de point d'appui (125) de sorte qu'une différence entre valeurs de niveau de point d'appui adjacentes (125) se situe dans une largeur de tolérance maximale.

10. Dispositif selon l'une des revendications précédentes, dans lequel le moyen (120) destiné à déterminer les valeurs de niveau de point d'appui (125) est réalisé pour utiliser une valeur de niveau de point d'appui déterminée auparavant dans le temps dans la détermination d'une valeur de niveau de point d'appui à déterminer actuellement, de sorte que les valeurs de niveau de point d'appui (125) fortement variables soit atténuées.

11. Dispositif selon l'une des revendications précédentes, dans lequel le moyen (130) destiné à déterminer l'évolution de la valeur de seuil (117) est réalisée pour déterminer l'évolution de la valeur de seuil (117) par une interpolation entre les valeurs de niveau de point d'appui (125) aux fréquences de point d'appui (115).

12. Dispositif selon l'une des revendications précédentes dans lequel le moyen (130) destiné à déterminer l'évolution de la valeur de seuil (117) est réalisé pour ajouter, lors de la détermination de l'évolution de la valeur de seuil (117), un décalage de sorte que l'évolution de la valeur de seuil (117) présente une distance décalée par rapport au fond de bruit.

13. Dispositif selon l'une des revendications précédentes, dans lequel le moyen (140) destiné à comparer est réalisé pour classifier par ailleurs le canal comme étant occupé lorsque la puissance momentanée des valeurs de niveau de réception (127) est supérieur à la puissance de comparaison de l'évolution de la valeur de seuil (117).

14. Dispositif selon l'une des revendications précédentes, dans lequel le moyen (140) destiné à comparer est réalisé pour déterminer une valeur moyenne de la puissance momentanée dans le canal et une autre valeur moyenne de la puissance de comparaison dans le canal, et par ailleurs pour classifier le canal comme étant occupé lorsque la valeur moyenne de la puissance momentanée est supérieure à l'autre valeur moyenne de la puissance de comparaison.

15. Procédé de détection d'occupation sélective en fréquence d'un canal dans une bande de fréquences, aux étapes suivantes consistant à:

détecter (105) un spectre de réception dans la bande de fréquences;
mettre à disposition (110) des fréquences de point d'appui (115) pour une évolution de valeur de seuil (117) par rapport à un fond de bruit dans la bande de fréquences;
déterminer (120) des valeurs de niveau de point d'appui (125) aux fréquences de point d'appui (115) sur base des valeurs de niveau de réception (127) du spectre de réception;
déterminer (130) l'évolution de valeur de seuil (117) dans la bande de fréquences sur base des fréquences de point d'appui (115) mises à disposition et des valeurs de niveau de point d'appui (125) aux fréquences de point d'appui (115); et
comparer (140) une puissance momentanée des valeurs de niveau de réception (127) dans le canal avec une puissance de comparaison dans le canal prédéterminée par l'évolution de la valeur de seuil (117), pour détecter en fonction de la comparaison une occupation ou non-occupation du canal.

FIG 1

FIG 2

FIG 3

**FIG 4**

FIG 5B

FIG 5A

FIG 6

FIG 7

|  | Start(MHz) | Stop(MHz) | Bandbreite | Ignorieren |
|---|---|---|---|---|
| 1 | 88,100000 | 107,500000 | 50 kHz | ☐ |
| 2 | 100,000000 |  | 100 kHz | ☐ |
| 3 | 90,000000 | 91,000000 |  | ☑ |
| 4 |  |  |  | ☐ |
| 5 |  |  |  | ☐ |
| 6 |  |  |  | ☐ |
| 7 |  |  |  | ☐ |
| 8 |  |  |  | ☐ |
| 9 |  |  |  | ☐ |
| 10 |  |  |  | ☐ |
| 11 |  |  |  | ☐ |
| 12 |  |  |  | ☐ |
| 13 |  |  |  | ☐ |
| 14 |  |  |  | ☐ |
| 15 |  |  |  | ☐ |
| 16 |  |  |  | ☐ |
| 17 |  |  |  | ☐ |
| 18 |  |  |  | ☐ |
| 19 |  |  |  | ☐ |
| 20 |  |  |  | ☐ |
| 21 |  |  |  | ☐ |
| 22 |  |  |  | ☐ |
| 23 |  |  |  | ☐ |
| 24 |  |  |  | ☐ |
| 25 |  |  |  | ☐ |
| 26 |  |  |  | ☐ |
| 27 |  |  |  | ☐ |
| 28 |  |  |  | ☐ |
| 29 |  |  |  | ☐ |
| 30 |  |  |  | ☐ |
| 31 |  |  |  | ☐ |
| 32 |  |  |  | ☐ |
| 33 |  |  |  | ☐ |
| 34 |  |  |  | ☐ |
| 35 |  |  |  | ☐ |
| 36 |  |  |  | ☐ |
| 37 |  |  |  | ☐ |
| 38 |  |  |  | ☐ |
| 39 |  |  |  | ☐ |
| 40 |  |  |  | ☐ |

# FIG 8A

| | Mitten-frequenz MHz | Bandbreite kHz | Belegung % | max. Pegel dBm | Durchschnitts-pegel dBm | rel. Genauigkeit % |
|---|---|---|---|---|---|---|
| 1 | 88,150000 | 50,000 | 10,7 | -80,1 | -88,5 | 27,9 |
| 2 | 88,200000 | 50,000 | 100,0 | -74,3 | -75,2 | 7,7 |
| 3 | 88,250000 | 50,000 | 17,6 | -79,6 | -87,9 | 20,7 |
| 4 | 88,500000 | 50,000 | 100,0 | -78,8 | -79,2 | 7,7 |
| 5 | 88,800000 | 50,000 | 95,0 | -82,8 | -83,2 | 9,4 |
| 6 | 88,850000 | 50,000 | 64,0 | -74,8 | -81,1 | 12,2 |
| 7 | 88,900000 | 50,000 | 100,0 | -66,9 | -68,9 | 7,7 |
| 8 | 88,950000 | 50,000 | 58,1 | -75,8 | -81,8 | 12,1 |
| 9 | 89,100000 | 50,000 | 100,0 | -80,1 | -80,4 | 7,7 |
| 10 | 89,400000 | 50,000 | 100,0 | -81,0 | -81,4 | 7,7 |
| 11 | 89,700000 | 50,000 | 86,6 | -77,4 | -80,0 | 10,4 |
| 12 | 89,750000 | 50,000 | 100,0 | -76,1 | -77,5 | 7,7 |
| 13 | 91,050000 | 50,000 | 13,1 | -72,2 | -81,8 | 26,7 |
| 14 | 91,350000 | 50,000 | 13,6 | -75,9 | -81,6 | 22,3 |
| 15 | 91,400000 | 50,000 | 100,0 | -67,8 | -69,3 | 7,7 |
| 16 | 91,450000 | 50,000 | 18,3 | -74,7 | -80,9 | 21,5 |
| 17 | 92,250000 | 50,000 | 27,0 | -68,1 | -78,1 | 19,4 |
| 18 | 92,300000 | 50,000 | 100,0 | -61,7 | -63,5 | 7,7 |
| 19 | 92,350000 | 50,000 | 42,1 | -67,7 | -76,9 | 13,9 |
| 20 | 92,850000 | 50,000 | 87,3 | -69,5 | -75,3 | 12,6 |
| 21 | 92,900000 | 50,000 | 100,0 | -61,5 | -63,2 | 7,7 |
| 22 | 92,950000 | 50,000 | 88,7 | -70,0 | -76,1 | 12,0 |
| 23 | 93,700000 | 50,000 | 82,5 | -81,5 | -82,3 | 29,1 |
| 24 | 94,450000 | 50,000 | 0,2 | -84,9 | -91,2 | - |
| 25 | 94,500000 | 50,000 | 59,7 | -77,1 | -83,4 | 23,7 |
| 26 | 94,550000 | 50,000 | 0,2 | -85,2 | -92,4 | - |
| 27 | 95,500000 | 50,000 | 83,1 | -81,5 | -83,4 | 16,6 |
| 28 | 95,750000 | 50,000 | 100,0 | -83,4 | -87,8 | 90,6 |
| 29 | 95,800000 | 50,000 | 0,9 | -71,8 | -75,2 | 7,7 |
| 30 | 95,850000 | 50,000 | 1,2 | -83,6 | -86,1 | 76,6 |
| 31 | 96,000000 | 50,000 | 2,0 | -83,5 | -85,3 | 67,9 |
| 32 | 96,350000 | 50,000 | 18,3 | -78,3 | -86,1 | 19,2 |

# FIG 8B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Evaluation of Spectrum Occupancy in Indoor and Outdoor Scenario in the Context of Cognitive Radio. *COGNITIVE RADIO ORIENTED WIRELESS NETWORKS AND COMMUNICATIONS, 2007. CROWN-COM 2007. 2ND INTERNATIONAL CON-FERENCE ON, IEEE,* 01. August 2007, ISBN 978-1-4244-0814-6, 420-427

- **SPAULDING, A.D ; HAGN, G.H.** On the Definition and Estimation of Spectrum Occupancy. *IEEE Transactions,* August 1977, vol. EMC-19 (3